Europäisches Patentamt

European Patent Office

Office européen des brevets

(11) Numéro de publication : **0 332 507 B1**

# (12) FASCICULE DE BREVET EUROPEEN

(45) Date de publication du fascicule du brevet :
**04.03.92 Bulletin 92/10**

(51) Int. Cl.⁵ : **F16L 23/00**

(21) Numéro de dépôt : **89400581.8**

(22) Date de dépôt : **02.03.89**

(54) **Ensemble de serrage de tuyaux composé d'un collier amovible et d'un porte-joint.**

(30) Priorité : **04.03.88 FR 8802785**

(43) Date de publication de la demande :
**13.09.89 Bulletin 89/37**

(45) Mention de la délivrance du brevet :
**04.03.92 Bulletin 92/10**

(84) Etats contractants désignés :
**DE GB**

(56) Documents cités :
**EP-A- 0 194 200**
**US-A- 3 481 633**
**US-A- 3 620 554**
**US-A- 4 095 809**
**US-A- 4 522 536**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Fiori, Robert
Route de Bagnols Saint Laurent Vernede
F-30330 Connaux (FR)**

(74) Mandataire : **Mongrédien, André et al
c/o BREVATOME 25, rue de Ponthieu
F-75008 Paris (FR)**

EP 0 332 507 B1

Jouve, 18, rue Saint-Denis, 75001 PARIS

## Description

La présente invention concerne un ensemble de serrage de tuyaux composé d'un collier amovible et d'un porte-joint utilisable essentiellement en milieu hostile, où l'on ne peut agir que par des outils télémanipulés ou par une boîte à gant.

Ce n'est qu'au prix de grandes difficultés que l'on peut manipuler des joints, les insérer et les maintenir dans les emplacements prévus pour eux entre des raccordements de tuyauteries tout en ayant à rapprocher simultanément ces tuyauteries et à les assembler par un collier de serrage. Ces manipulations nécessitent en effet une multiplicité d'outils dont l'utilisation, du fait des conditions de travail en milieu hostile, est particulièrement délicate.

Le brevet EP-A-0 194 200 décrit un collier de serrage qui sert à assembler les embouts mais n'exerce pas d'action sur le montage du joint, qui doit être accompli par d'autres moyens.

L'invention permet par contre de monter facilement des joints d'étanchéité dans des raccordements de tuyaux par des outils de télémanipulation dans de bonnes conditions tout en rapprochant les extrémités des tuyaux concernés.

Un autre objet de l'invention est de protéger les joints pendant leur transfert vers la tuyauterie.

L'invention garantit également que le joint reste en place pendant le serrage des tuyaux et que le joint sera facilement extrait quand les tuyaux seront démontés.

On y parvient à l'aide d'un porte-joint de constitution originale monté sur un collier de serrage utilisé pour joindre les tuyaux et adapté pour recevoir le porte-joint sans que celui-ci perturbe le fonctionnement normal du collier.

Le brevet US-A-4 095 809 décrit un porte-joint que des boulons de bridage entre des embouts maintiennent à une position correcte par des surfaces d'appui, mais cette construction n'est pas appropriée à la télémanipulation.

Plus précisément, l'invention concerne un ensemble de serrage de raccordements de tuyaux munis d'embouts saillants, composé d'un collier de serrage qui comprend deux demi-colliers pivotant autour d'un axe commun et munis d'une gorge de logement et de rapprochement des embouts, ensemble caractérisé en ce qu'il est en outre composé d'un porte-joint de maintien d'un joint à placer entre les embouts, le porte-joint étant constitué de deux pattes et d'une queue à laquelle les pattes sont reliées, les pattes étant pourvues de languettes de maintien du joint entre les pattes, la queue et le collier de serrage étant pourvus de moyens de liaison du porte-joint au collier et de centrage du porte-joint entre les demi-colliers.

Les moyens de liaisons consistent en l'axe commun et en un trou sur la queue dans lequel l'axe commun pivote. Les moyens de centrage consistent quant à eux en deux surfaces circulaires sur la queue et sur chacune desquelles glisse une surface circulaire sur un demi-collier respectif.

La queue et le collier sont de préférence également pourvus de moyens de butée pour limiter l'écartement par pivotement des demi-colliers.

On va maintenant décrire l'invention plus en détail à l'aide des figures suivantes, annexées à titre illustratif et non limitatif et dont l'énumération suit :

– la figure 1 représente une vue du porte-joint,

– la figure 2 représente un détail agrandi du porte-joint, sur lequel on a placé le joint,

– la figure 3 représente le porte-joint et le joint enserrés dans un collier de serrage connu en position de fermeture,

– la figure 4 représente les mêmes pièces, le collier étant dans une position d'ouverture, et

– la figure 5 représente le montage d'un joint d'étanchéité entre deux tuyaux.

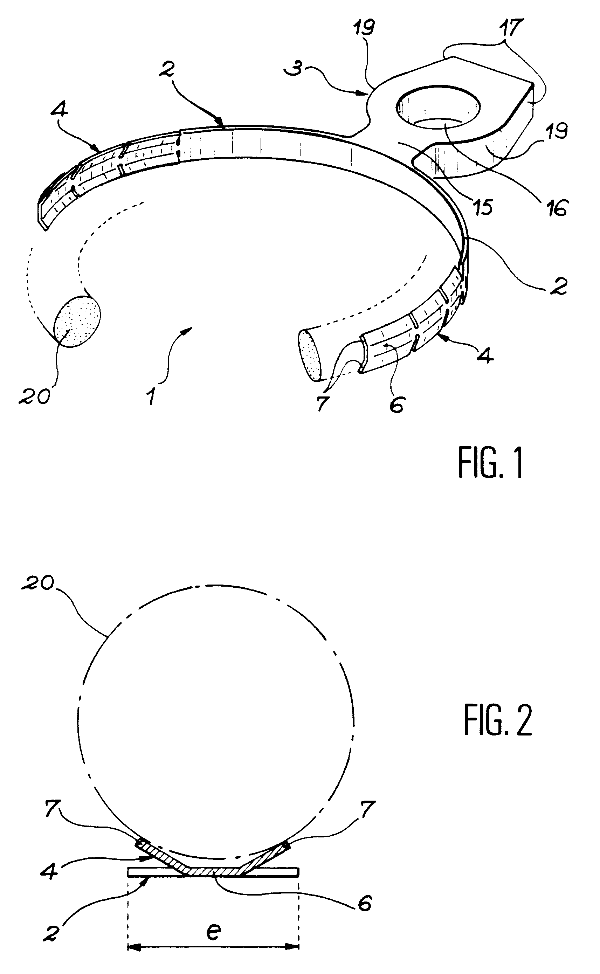

Sur la figure 1, le porte-joint est référencé globalement par 1 ; il se compose de deux pattes symétriques 2 et d'une queue 3. Les deux pattes 2 sont en arc de cercle, embrassent un peu plus d'un quart de tour et sont terminées à leur extrémité par des languettes 4. Comme on le voit mieux sur la figure 2, les languettes 4 s'étendent le long de la patte 2 et leur section peut se décomposer en une partie centrale 6 et deux ailes 7 symétriques par rapport à la partie centrale et s'écartant l'une de l'autre en formant un angle obtus.

Un joint 20, par exemple de forme torique en métal, tend à ouvrir les pattes 2 quand il est placé entre elles en prenant appui sur les languettes 4 et leurs ailes 7, si bien que les pattes 2 maintiennent en place le joint 10.

La queue 3 comprend une partie de raccordement 15 avec les pattes 2, un trou 16 central dont l'utilité va être expliquée plus loin et des surfaces d'appui symétriques par rapport au trou 16 : deux surfaces d'appui rectilignes 17 complétées par deux surfaces d'appui à rayon de courbure constant 19 proche de la partie de raccordement 15.

Le porte-joint 1 s'étend dans un plan et son épaisseur e est faible, plus faible que celle du joint 20.

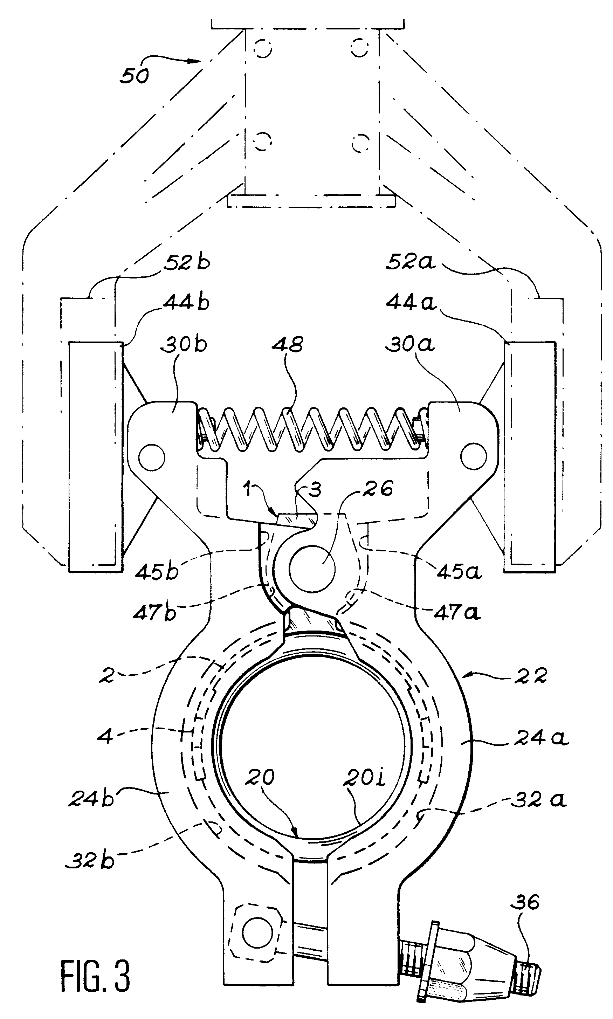

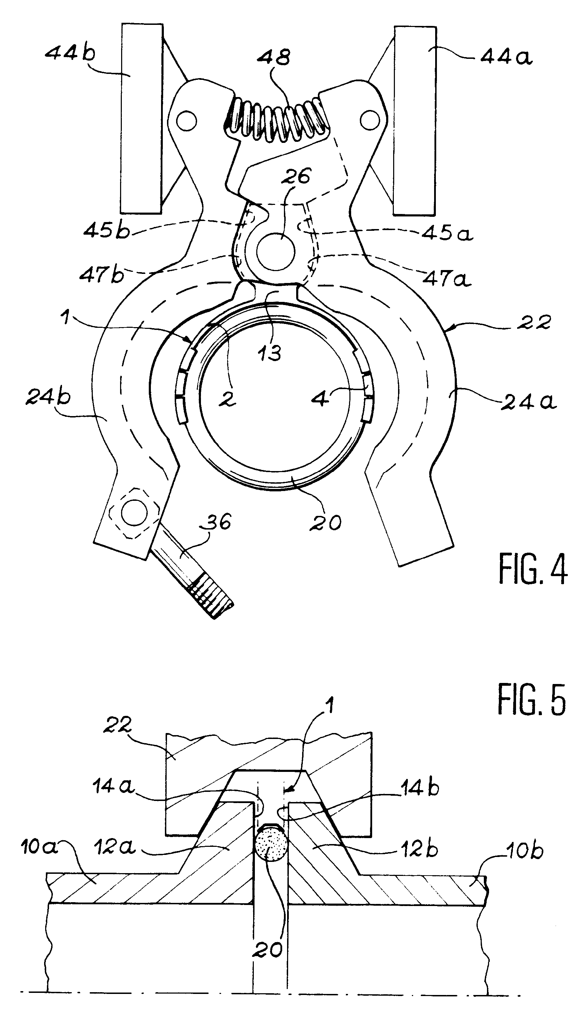

On se reporte maintenant aux figures 3 et 4 pour expliquer le montage du porte-joint 1 sur le collier de serrage 22. Ce collier de serrage, donné à titre d'exemple, constitue une invention protégée par le brevet français n° 2 578 593 du même inventeur et du même titulaire et ne sera par conséquent décrit que dans ses grandes lignes en respectant les numéros de référence de ce brevet publié, à l'exception de quelques modifications faisant partie de l'invention actuelle et rendues nécessaires pour recevoir le porte-joint 1.

Le collier de serrage 22 se compose donc de deux demi-colliers semi-circulaires 24a et 24b qui peuvent pivoter autour d'un axe 26 commun pour ouvrir ou fermer le collier de serrage 22. En effet, les demi-colliers 24a et 24b sont chacun munis d'un levier de préhension 30a et 30b terminé par un adaptateur 44a et 44b, articulé sur le levier de préhension 30a ou 30b correspondant, et sur lequel agissent des patins 52a et 52b d'une pince de télémanipulation 50. Les patins 52a et 52b peuvent s'écarter ou se rapprocher pour faire tourner les demi-colliers 24a et 24b autour de l'axe 26 ; un ressort 48 s'étend entre les leviers de préhension 30a et 30b pour maintenir en temps normal les demi-colliers 24a et 24b fermés. Un boulon basculant 36 permet de réunir les demi-colliers 24a et 24b et de les maintenir serrés.

Chaque demi-collier 24a et 24b est pourvu sur sa face interne d'une gorge 32a et 32b respectivement. Selon l'invention, le porte-joint 1 est monté sur le collier 22 en insérant son trou 16 sur l'axe 26 dont le diamètre est légèrement inférieur. La queue 3 est alors entre des surfaces d'appui latérales 45a,b et 47a,b des demi-colliers 24a et 24b qui sont complémentaires des surfaces 17 et 19 de la queue 3.

Les pattes 2 s'étendent alors largement à l'intérieur des gorges 32a et 32b, et le joint 20 également : il ne dépasse des demi-colliers 24 que par une partie interne 20i de taille réduite, si bien qu'on peut le tenir pour protégé contre les incidents qui pourraient survenir pendant la télémanipulation et qui auraient pu le déplacer ou le disjoindre.

Le porte-joint 1 reste parfaitement symétrique par rapport aux demi-colliers 24a et 24b en vue du centrage du joint 20. On y parvient en profilant de façon appropriée les surfaces d'appui latérales des demi-colliers 24a et 24b. Ces surfaces contiennent une surface rectiligne 45a ou 45b et une surface à rayon de courbure constant 47a ou 47b, dont le rayon de courbure est identique à celui des parties correspondantes 19 de la queue 3.

Quand le collier 22 est fermé, comme sur la figure 3, les surfaces courbes 19 et 47 sont très proches l'une de l'autre, ce qui empêche le porte-joint 1 de pivoter autour de l'axe 26 et donc de décentrer le joint 10. Les parties rectilignes 19 et 45 forment par ailleurs des angles aigus.

Quand les patins 52a et 52b appuient sur les adaptateurs 44a et 44b, les demi-colliers 24a et 24b s'ouvrent et dégagent le joint 20 et les pattes 2 (figure 4).

Quand on ouvre le collier 22, le centrage du porte-joint 1 est maintenu, et jusqu'à la position d'ouverture maximale, quand les parties complémentaires rectilignes 17 et 45 entrent en contact et provoquent une butée.

On procède alors à l'assemblage des tuyaux, décrit avec la figure 5.

Comme il est expliqué dans le brevet antérieur, les demi-colliers 24a et 24b viennent se placer autour d'embouts coniques complémentaires 12a et 12b de deux extrémités de tuyauteries 10a et 10b, et le resserrement progressif du collier 22 fait que les embouts coniques 12a et 12b pénètrent dans les gorges 32a et 32b, qui sont profilées en fonction des conicités des embouts, et sont petit à petit rapprochés l'un de l'autre au fur et à mesure qu'ils s'enfoncent dans les gorges 32a et 32b.

Le porte-joint 1 et le joint 20 demeurent entre les faces d'extrémité planes 14a et 14b des embouts 12. Le serrage du collier 22, par relâchement de la pince 50 puis serrage du boulon basculant 36, se poursuit jusqu'à ce que le joint 20 soit comprimé entre ces faces d'extrémité planes 14a et b. Le porte-joint 1 n'est pas détérioré par écrasement car son épaisseur est plus faible que celle du joint 20.

Quand, de manière connue en soi, le collier 22 est retiré pour changer le joint 20, celui-ci reste coincé dans le porte-joint 1. On peut donc le retirer sans aucune difficulté.

L'invention peut s'appliquer à tout type de joint à contour circulaire, et notamment aux joints toriques en métal ou en élastomère. Dans ce dernier cas, il faudra probablement allonger un peu les pattes 2 pour obtenir un maintien en place plus sûr du joint 20.

Le porte-joint peut également être adapté à d'autres colliers de serrage, les moyens de liaison, de centrage et de butée situés sur la queue 3 pouvant alors prendre des allures variées.

**Revendications**

1. Ensemble de serrage de raccordements de tuyaux (10) munis d'embouts saillants (12), composé d'un collier de serrage (22) qui comprend deux demi-colliers (24) pivotant autour d'un axe commun (26) et munis d'une gorge (32) de logement et de rapprochement des embouts (12), ensemble caractérisé en ce qu'il est en outre composé d'un porte-joint (1) de maintien d'un joint (20) à placer entre les embouts (12), le porte-joint étant constitué de deux pattes (2) et d'une queue (3) à laquelle les pattes (2) sont reliées, les pattes étant pourvues de languettes (4) de maintien du joint entre les pattes (2), la queue (3) et le collier de serrage (22) étant pourvus de moyens (16, 19, 26, 7) de liaison du porte-joint au collier et de centrage du porte-joint entre les demi-colliers, les moyens de liaison consistant en l'axe commun (26) et en un trou (16) sur la queue (3) dans lequel l'axe commun pivote et les moyens de centrage consistant en deux surfaces circulaires sur la queue, sur chacune desquelles glisse une surface circulaire sur un demi-collier respectif.

2. Ensemble de serrage selon la revendication 1, caractérisé en ce que la queue (3) et le collier de serrage (22) sont également pourvus de moyens de butée (17, 45) pour limiter l'écartement par pivotement des demi-colliers.

3. Ensemble de serrage selon la revendication 2, caractérisé en ce que les moyens de butée consistent en des surfaces rectilignes établies en prolongement des surfaces circulaires de la queue et des demi-colliers.

## Patentansprüche

1. Einrichtung zum Festspannen von Verbindern für Rohre (10), die mit vorstehenden Endflanschen (12) versehen sind, bestehend aus einem Spannring (22) aus zwei Halbringen (24), die um eine gemeinsame Achse (26) schwenkbar sind und mit einer Rille (32) zur Aufnahme der und Anlage an die Endflansche (12) versehen sind, **dadurch gekennzeichnet,** daß sie weiterhin einen Dichtungsträger (1) zum Halten einer zwischen die Endflansche (12) einzufügenden Dichtung (20) aufweist, der aus zwei Schenkeln (2) und einer Fahne (3) besteht, an der die Schenkel (2) angebracht sind, wobei die Schenkel mit Zungen (4) zum Halten der Dichtung zwischen den Schenkeln (2) versehen sind, die Fahne (3) und der Spannring (22) mit Einrichtungen (16, 19, 26, 7) zum Verbinden des Dichtungsträgers mit dem Ring und zur Zentrierung des Dichtungsträgers zwischen den Halbringen versehen sind, wobei die Verbindungseinrichtungen aus der gemeinsamen Achse (26) und einem Loch (16) an der Fahne (3) bestehen, indem die gemeinsame Achse schwenkt, und die Zentriereinrichtungen aus zwei kreisförmigen Flächen an der Fahne bestehen, wobei auf jeder derselben eine kreisförmige Fläche an einem entsprechenden Halbring gleitet.

2. Spanneinrichtung nach Anspruch 1, **dadurch gekennzeichnet,** daß die Fahne (3) und der Spannring (22) auch mit Anschlageinrichtungen (17, 45) versehen sind, um die Ausweitung durch Verschwenken der Halbringe zu begrenzen.

3. Spanneinrichtung nach Anspruch 2, **dadurch gekennzeichnet,** daß die Anschlageinrichtungen aus geradlinigen Flächen bestehen, die in Verlängerung der kreisförmigen Flächen der Fahne und der Halbringe verlaufen.

## Claims

1. Clamping assembly for pipe connection (10) provided with projecting end fittings (12) and constituted by a clamping collar (22) which includes two half-collars (24) pivoting around a common shaft (26) and provided with a throat (32) for housing and bringing together the end fittings (12), characterized in that said assembly is also composed of a joint holder (1) for holding in position a joint (20) to be placed between the end fittings (12), the joint holder consisting of two clamps (2) and a tail (3) to which the clamps (2) are connected, the clamps being provided with tongues (4) for holding the joint between the clamps (2), the tail (3) and the clamping collar (22) being provided with means (16, 19, 26, 7) for linking the joint holder to the clamping collar and for centring the joint holder between the half-collars, the connecting means comprising the common shaft (26) and a hole (16) on the tail (3) in which said shaft pivots and the centring means comprising two circular surfaces on the tail, on each of which a circular surface slides on a respective half-collar.

2. Clamping assembly according to claim 1, characterized in that the tail (3) and the clamping collar (22) are also provided with stop means (17, 45), so as to limit clearance by the pivoting of the half-collars.

3. Clamping assembly according to claim 2, characterized in that the stop means consist of rectilinear surfaces established as an extension of the circular surfaces of the tail and the half-collars.

FIG. 1

FIG. 2

FIG. 3

44b

48

44a

26

45b

45a

47b

47a

1

13

22

24b

2

4

24a

20

36

**FIG. 4**

**FIG. 5**

22

1

14a

14b

10a

12a

12b

10b

20